# EUROPÄISCHE PATENTSCHRIFT

(11) **EP 3 544 941 B1**
(45) Veröffentlichungstag und Bekanntmachung des Hinweises auf die Patenterteilung: **07.06.2023**
(21) Anmeldenummer: 17811241.3
(22) Anmeldetag: 27.11.2017
(51) Int. Cl.: C05F 3/00, C05B 7/00

(54) **GESAMTVERFAHREN ZUR AUFBEREITUNG VON BIOLOGISCHEN ABFÄLLEN**
COMPLETE PROCESS FOR TREATMENT OF BIOWASTES
PROCÉDÉ GLOBAL POUR TRAITER DES DÉCHETS BIOLOGIQUES

(30) Priorität: 28.11.2016 DE 102016122869
(43) Veröffentlichungstag der Anmeldung: 02.10.2019
(73) Patentinhaber: REMONDIS Aqua GmbH & Co. KG, 44536 Lünen (DE)
(72) Erfinder: SCHNEE, Rainer, 55130 Mainz (DE); OPITZ, Eva, 55411 Bingen (DE)
(74) Vertreter: Peters, Hajo
(86) Internationale Anmeldenummer: PCT/EP2017/080473
(87) Internationale Veröffentlichungsnummer: WO 2018/096133

(56) Entgegenhaltungen:
- DE-A1- 3 726 961
- DE-A1-102004 033 310
- DE-A1-102009 020 745
- US-A1- 2003 057 160
- US-A1- 2009 206 028

## Beschreibung

### Gegenstand der Erfindung

Die Erfindung betrifft ein Gesamtverfahren zur Aufbereitung von biologischen Abfällen, welche eine wässrige Flüssigphase umfassen, in der wenigstens Harnstoff und Ammoniumverbindungen sowie anorganisch und organisch gebundene Phosphate enthalten sind, vorzugsweise von Gülle, Jauche und Gärresten aus Biogasanlagen. Das erfindungsgemäße Gesamtverfahren ist geeignet, die wässrige Phase der biologischen Abfälle so weit von Stickstoff und Phosphor abzureichern, dass sie bedenkenlos in den Abwasserkreislauf zurückgeführt oder in der Landwirtschaft ausgebracht werden kann. Darüber hinaus werden Stickstoff und Phosphor wirtschaftlich aus der wässrigen und der partikulären Phase der biologischen Abfälle zurückgewonnen und verwertbaren Produkten zugeführt.

### Hintergrund der Erfindung

Biologische Abfälle im Sinne der vorliegenden Erfindung umfassen Gülle, Jauche und Gärreste aus Biogasanlagen, aber auch andere Produkte, welche eine wässrige Flüssigphase besitzen, in der wenigstens Harnstoff und Ammoniumverbindungen sowie anorganisch und organisch gebundene Phosphate gelöst und/oder partikulär gebunden enthalten sind.

Gülle und Jauche fallen in großen Mengen in der Tierhaltung an. Gülle ist ein Gemisch aus Kot, Harn und Einstreu, dessen Wassergehalt sehr unterschiedlich sein kann. Als Jauche bezeichnet man den Harn der Tiere, der nicht von Einstreu aufgenommen wurde. Häufig enthält Jauche auch den Sickersaft des bei der Tierhaltung anfallenden Mistes und Reinigungswasser aus den Ställen. Stickstoff ist in Gülle und Jauche zu einem großen Anteil in der Form von Harnstoff und Nitrat gebunden. Gülle und Jauche vergären während der Lagerung durch mikrobielle Umsetzung, wodurch der Stickstoff aus den organischen Bindungsformen in die mineralische Ammonium-Form überführt wird.

Gülle und Jauche eignen sich gut als landwirtschaftliche Dünger für die Nährstoffversorgung von Pflanzen. Insofern kann die Düngung von beispielsweise Futterpflanzen mit Gülle oder Jauche von den damit wiederum versorgten Nutztieren einen sinnvollen Nährstoffkreislauf darstellen. Werden Gülle und Jauche jedoch in unausgewogenen oder zu hohen Mengen oder auch außerhalb der Vegetationsperiode auf landwirtschaftlichen Nutzflächen ausgebracht, führt dies zu einer Überlastung der Aufnahme- und Verwertungskapazitäten des Bodens für die in der Gülle oder Jauche enthaltenen Nährstoffe und damit zur Gefahr der Überdüngung und zum Eindringen von Nitrat und Ammoniak in das Grundwasser, was wiederum ein Problem für die kommunale Wasserversorgung darstellt. Zudem können erhebliche Anteile des in der Gülle bzw. Jauche gelösten Ammoniaks ausgasen und zu weiträumigen Waldschäden beitragen.

Diese Problematik hat die Gesetzgebung in einigen Ländern und Regionen bereits dazu veranlasst, Grenzwerte für die Ausbringung von Gülle pro Jahr und Hektar Boden festzusetzen. In Regionen mit intensiver Massentierhaltung fallen erhebliche Überschüsse an Gülle und Jauche an. Diese stellen für die Betriebe ein Entsorgungsproblem dar, da keine ausreichenden Speicherkapazitäten und/oder hinreichend große und nahegelegene Nutzflächen zur Ausbringung der Gülle bzw. Jauche als Dünger im zulässigen Maße zur Verfügung stehen.

Infolgedessen hat sich ein Handel für Gülledünger zwischen Regionen mit hohen Überschüssen an Gülle aufgrund intensiver Tierhaltung und Regionen mit weniger Tierhaltung entwickelt, der u.a. über sogenannte Güllebörsen abgewickelt wird. Der Transport dieses Gülledüngers über weite Strecken per LKW oder Schiff verursacht jedoch unter anderem aufgrund des hohen Volumens dieses Gülledüngers hohe Kosten und eine nicht unerhebliche zusätzliche Umweltbelastung durch den Transportverkehr. Zudem sind die in Regionen mit intensiver Massentierhaltung erzeugten Mengen an Gülle wesentlich größer als der Bedarf an Gülledünger in den Abnehmerregionen. Überschüssige Gülle wird somit zu einem Abfallprodukt, das entsorgt werden muss, obwohl darin wertvolle Nährstoffe enthalten sind.

Ähnliches gilt auch für Gärreste aus Biogasanlagen und beispielsweise auch für Klärschlämme aus Kläranlagen, die ebenfalls wertvolle Nährstoffe enthalten, die der Pflanzendüngung dienen können und hierfür auch eingesetzt werden. Letztgenannte Klärschlämme sind jedoch regelmäßig mit Schwermetallen und organischen Verbindungen belastet, die nicht in die Nahrungskette gelangen sollen, weshalb auch der Einsatz von Klärschlämmen als Dünger zunehmend beschränkt wird.

Da die vorgenannten biologischen Abfälle, einschließlich Gülle, Jauche, Gärresten aus Biogasanlagen und Klärschlämmen, ein Entsorgungsproblem darstellen, sind verschiedenste Verfahren entwickelt worden, diese Abfälle aufzubereiten, um sie teilweise oder vollständig entsorgen oder auch um die darin enthaltenen Wert- und Nährstoffe zurückgewinnen und einer Nutzung zuführen zu können. Verfahren zur Aufbereitung und/oder Entsorgung von Gülle und anderen biologischen Abfällen sind beispielsweise in DE 41 03 308, DE 10 2012 211 781, DE 10 2006 043 246 und DE 10 2010 033 251 beschrieben. Ein System zur Behandlung flüssiger Tierabfälle wird in US2009/0206028 beschrieben.

Ein Nachteil vieler dieser Verfahren ist, dass sie entweder grundsätzlich mit sehr hohen Kosten verbunden sind oder nur in Großanlagen wirtschaftlich rentabel durchgeführt werden können. Einige der Verfahren sind ausschließlich auf die Entsorgung ohne eine Rückgewinnung der Wert- und Nährstoffe der biologischen Abfälle gerichtet. Wiederum andere Verfahren befassen sich nur mit der Gewinnung von Wert- und Nährstoffen, aber nicht mit der Entsorgungsproblematik der zurückbleibenden Anteile, insbesondere der voluminösen Flüssiganteile, die nicht wie Feststoffe deponiert oder beispielsweise als Füllstoffe in der Bauindustrie verwendet werden können.

Ein Weg der Entsorgung von biologischen Abfällen, einschließlich Gülle, Gärresten aus Biogasanlagen und Klärschlämmen, ist deren Verbrennung. Die Verbrennungsasche wird anschließend deponiert oder anderweitig verwertet, z. B. als Füllmittel im Straßenbau verbaut. Auch dabei gehen die darin enthaltenen Wert- und Nährstoffe, unter anderem Stickstoffverbindungen und Phosphat, aber auch beispielsweise eine Reihe von Spurenelementen, die als Nährstoffe für die Pflanzendüngung ebenfalls geeignet sind, dem Wirtschafts- und Nährstoffkreislauf verloren. Weil die Ressourcen für solche Wertstoffe, insbesondere für Rohphosphate für die Herstellung von Düngern und anderen Produkten, endlich sind, wurden Verfahren entwickelt, die Wert- und Nährstoffe aus den Verbrennungsaschen zurückzugewinnen.

Ein Beispiel für ein solches Recyclingverfahren zur Rückgewinnung von Wertstoffen aus Verbrennungsaschen, insbesondere aus Klärschlammasche, welche große Mengen an Phosphaten überwiegend in der Form von Calcium-, Eisen- und Aluminiumphosphaten enthält, ist das sogenannte "REMONDIS TetraPhos-Verfahren" der Firma Remondis Aqua GmbH & Co. KG, welches in den Patentanmeldungen DE 10 2013 018 650, DE 10 2013 018 652 und DE 10 2014 006 278 beschrieben ist. Bei diesem Verfahren entsteht unter anderem als ein Produkt oder Nebenprodukt eine von schädlichen Schwermetallen abgereicherte Rohphosphorsäure, welche ein wertvolles Ausgangsprodukt bei der Herstellung von Phosphatprodukten aller Art darstellt. Allerdings ist es nach den Vorschriften vieler Länder nicht zulässig, Phosphorsäure, die aus der Aufbereitung von biologischen Abfällen, von Klärschlammprodukten oder von Klärschlammasche gewonnen wurde, für die Herstellung von Phosphaten einzusetzen, die in Lebensmitteln, Futtermitteln oder anderen Produkten, mit denen Mensch und Tier in unmittelbaren Kontakt kommen, eingesetzt werden oder zu Lebensmitteln oder solchen anderen Produkten verarbeitet werden. Eine solche Phosphorsäure kann daher allenfalls für die Herstellung von Produkten verwendet werden, für die sie nicht den vorgenannten Beschränkungen unterliegt, wie beispielsweise für die Herstellung von Phosphatdünger für die landwirtschaftliche Düngung.

Es wäre daher wünschenswert, biologische Abfälle der hierin genannten Art, wie beispielsweise Gülle, Jauche oder Gärreste aus Biogasanlagen, auf wirtschaftliche Weise entsorgen und gleichzeitig die darin enthaltenen Wert- und Nährstoffe zurückgewinnen und einer vorteilhaften und umweltverträglichen Nutzung zuführen zu können, um damit einen Stoffkreislauf für Wert- und Nährstoffe zu schließen.

### Aufgabe der Erfindung

Die Aufgabe der vorliegenden Erfindung bestand daher in der Bereitstellung eines Gesamtverfahrens zur Aufbereitung von biologischen Abfällen, die wenigstens Harnstoff und Ammoniumverbindungen sowie anorganisch und organisch gebundene Phosphate in einer wässrigen Phase gelöst oder partikulär gebunden enthalten, vorzugsweise von Gülle, Jauche und Gärresten aus Biogasanlagen, welches
neben den biologischen Abfällen kostengünstige Einsatzstoffe verwendet, Wert- und Nährstoffe aus den biologischen Abfällen zurückgewinnt, insbesondere Stickstoff und Phosphor, und diese einer erneuten nützlichen Verwendung zuführt, die wässrige Phase der biologischen Abfälle so weit von Stickstoff und Phosphor abreichert, dass sie in den kommunalen Abwasserkreislauf zurückgeführt oder in der Landwirtschaft ausgebracht werden kann, und die biologischen Abfälle insgesamt in einem wirtschaftlich rentablen Kreislaufprozess aufbereitet und Umweltbelastungen gegenüber der bisherigen Entsorgung und/oder Verwendung biologischer Abfälle vermindert.

### Beschreibung der Erfindung

Gelöst wird diese Aufgabe erfindungsgemäß durch ein Gesamtverfahren zur Aufbereitung von biologischen Abfällen, welche eine wässrige Flüssigphase umfassen, in der wenigstens Harnstoff und Ammoniumverbindungen sowie anorganisch und organisch gebundene Phosphate gelöst und/oder in partikulärer Form enthalten sind, vorzugsweise von Gülle, Jauche und Gärresten aus Biogasanlagen, umfassend die folgenden Verfahrensstufen:

| | |
|---|---|
| Stufe (a): | Einleiten von Kohlendioxidgas [CO₂] unter erhöhtem Druck oder von überkritischem Kohlendioxid in die Flüssigphase, um partikulär gebundene Phosphate in Lösung zu bringen; |
| Stufe (b): | Reduzieren des CO₂-Gehalts in der Flüssigphase durch Ansäuern der Flüssigphase und Austreiben von gelöstem CO₂ und/oder als Carbonat gebundenem CO₂; |
| Stufe (c): | Alkalisieren der Flüssigphase unter Freisetzung von Ammoniak [NH₃], vorzugsweise mittels CaO oder Ca(OH)₂ (Kalkmilch), gegebenenfalls im Gemisch mit |
| | NaOH, und Austreiben des Ammoniaks [NH₃] unter Erwärmung und/oder durch Anlegen eines Unterdruckes und/oder mit Hilfe eines Luft- oder Dampfstromes (Ammoniak-Stripping); |
| Stufe (d): | Fällen und Abtrennen von Calcium-Phosphat aus der Flüssigphase, vorzugsweise als Tricalcium-Phosphat [Ca₃(PO₄)₂] oder Hydroxylapatit [Ca₅(PO₄)₃(OH)]; |
| Stufe (e): | Umsetzen des in Stufe (c) gewonnenen Ammoniaks [NH₃] mit Phosphorsäure [H₃PO₄] unter Erhalt von Ammonium-Phosphat-Verbindung, vorzugsweise Di-Ammoniumhydrogenphosphat [(NH₄)₂HPO₄] (Dünger), und Abtrennen der gewonnenen Ammonium-Phosphat-Verbindung; |
| Stufe (f): | i) Verwendung oder Bereitstellen des in Stufe (d) gewonnenen Calcium-Phosphats zur Verwendung als Pflanzennährstoff (Dünger) und/oder |
| | ii) Umsetzen des in Stufe (d) gewonnenen Calcium-Phosphats mit Schwefelsäure [H₂SO₄] unter Gewinnung von Calcium-Sulfat (Gips) und Phosphorsäure [H₃PO₄] und Abtrennen des Calcium-Sulfats von der Flüssigphase und/oder |
| | iii) Mischen des in Stufe (d) gewonnenen Calcium-Phosphats mit der Asche verbrannter biologischer Abfälle und/oder Klärschlammasche und Umsetzen des Gemisches mit Phosphorsäure [H₃PO₄], Salpetersäure [HNO₃] oder einem Mineralsäuregemisch der beiden Säuren unter Gewinnung von Phosphorsäure [H₃PO₄]. |

Sofern in dem Ausgangsmaterial, d. h. den eingesetzten biologischen Abfällen, grobe Feststoffe enthalten sind, die die Fließfähigkeit des Materials in der Anlage zur Durchführung des Verfahrens beeinträchtigen, beispielsweise Pflanzenreste, Stroh oder sonstige Materialien mit Abmessungen in wenigstens einer Dimension von beispielsweise wenigstens 2 bis 5 cm, so werden diese zu Beginn des erfindungsgemäßen Verfahrens zweckmäßigerweise entfernt. Dies kann durch mechanische Abtrennung erfolgen, beispielsweise durch Sieben, mittels eines Rechens, durch Sedimentation, Filtration, Zentrifugation oder einer Kombination dieser Verfahren. Alternativ oder ergänzend kann die Fließfähigkeit des Ausgangsmaterials auch durch mechanisches Zerkleinern der groben Feststoffe hergestellt werden, beispielsweise durch Häckseln, Vermahlen oder ein vergleichbares geeignetes Verfahren.

Gülle und Jauche, aber auch andere biologische Abfälle, enthalten zumindest zum Zeitpunkt ihrer Entstehung im landwirtschaftlichen Betrieb einen erheblichen Anteil an Harnstoff, in dem Stickstoff gebunden ist, der nach dem erfindungsgemäßen Verfahren zurückgewonnen werden soll. Bei der Lagerung dieser Abfälle vor der Durchführung des erfindungsgemäßen Verfahrens wird in der Regel ein Teil des Harnstoffs durch natürliche Urease zu Ammonium und/oder Ammoniak abgebaut, welche der weiteren Stickstoffgewinnung in dem erfindungsgemäßen Verfahren direkt zur Verfügung stehen. Je nach Lagerungsdauer, Lagerungsbedingungen und natürlichem Ureasegehalt der eingesetzten biologischen Abfälle kann es jedoch zweckmäßig sein, noch nicht abgebauten Harnstoff für die Stickstoffgewinnung zu Beginn des erfindungsgemäßen Verfahrens zu Ammonium und/oder Ammoniak abzubauen. In einer Ausführungsform der Erfindung wird daher der in der Flüssigphase enthaltene Harnstoff unter Erhalt von Ammoniak und/oder Ammonium enzymatisch hydrolysiert, vorzugsweise unter Verwendung des Enzyms Urease. Die enzymatische Hydrolyse von in der Flüssigphase biologischer Abfälle enthaltenem Harnstoff unter Erhalt von Ammoniak und/oder Ammonium ist grundsätzlich bekannt, beispielsweise aus dem Verfahren zur Gülle-Entsorgung gemäß DE 41 03 308, auf deren gesamten Offenbarungsgehalt daher hierin Bezug genommen wird.

### Zu Stufe (a)

Ein großer Anteil des Phosphats in biologischen Abfällen, teilweise mehr als 90% des enthaltenen Phosphats, liegt in der Form anorganischer oder organischer Phosphatverbindungen partikulär gebunden vor. Dies bedeutet, dass die Phosphatverbindungen entweder selbst Feststoffe sind oder sie an Feststoffe angelagert sind und somit nicht gelöst in der wässrigen Phase vorliegen. Im Sinne der vorliegenden Erfindung werden solche Phosphate als "partikulär gebundene Phosphate" bezeichnet. Beispielsweise wurde gefunden, dass Phosphate in die Matrix von ungelöstem Calciumcarbonat eingebaut oder an dessen Oberfläche adsorbiert vorliegen können. Um diese partikulär gebundenen Phosphate gewinnen zu können, wird in Stufe (a) des erfindungsgemäßen Verfahrens Kohlendioxidgas (CO₂) unter erhöhtem Druck oder überkritisches Kohlendioxid in die Flüssigphase eingeleitet. Dabei geht ein großer Teil der partikulär gebundenen Phosphate in Lösung. Ein Verfahren zur Gewinnung von Phosphaten aus Klärschlammprodukten unter Einleitung von Kohlendioxidgas (CO₂) unter erhöhtem Druck oder überkritischem Kohlendioxid in die Flüssigphase ist aus der DE 10 2009 020 745 bekannt, auf die hierin vollumfänglich Bezug genommen wird. Das darin beschriebene Verfahren kann in Stufe (a) des erfindungsgemäßen Verfahrens entsprechend angewendet werden, um partikulär gebundene Phosphate erfindungsgemäß in Lösung zu bringen.

### Zu Stufe (b):

Die Flüssigphase des in Stufe (a) erhaltenen Ansatzes enthält sowohl gelöstes CO₂ als auch in der Form von Carbonat gebundenes CO₂. Dieses entsteht bei der Harnstoff-Hydrolyse in den biologischen Abfällen durch natürlich vorkommende oder auch gegebenenfalls erfindungsgemäß zugesetzte Urease. Darüber hinaus enthält die Flüssigphase CO₂, welches in Stufe (a) zum Lösen partikulär gebundener Phosphate eingeleitet wurde. Der in der Flüssigphase unter anderem ebenfalls bei der Harnstoff-Hydrolyse entstandene Ammoniak und das CO₂ liegen in der Flüssigphase im Gleichgewicht mit Ammoniumcarbonat und Ammoniumhydrogencarbonat vor. Bei der Erhöhung des pH-Wertes durch Alkalisieren mit CaO oder Ca(OH)₂ in der nachfolgenden Stufe (c) für das Ammoniak-Stripping würde aufgrund des hohen CO₂-Gehalts in der Flüssigphase nicht nur das erwünschte Calciumphosphat, sondern in hohem Anteil auch unerwünschtes Calciumcarbonat entstehen und ausfallen. Vor dem Alkalisieren der Flüssigphase für das Ammoniak-Stripping in der nachfolgenden Stufe (c) wird daher der CO₂-Gehalt in der Flüssigphase erfindungsgemäß durch Ansäuern der Flüssigphase und Austreiben von gelöstem CO₂ und/oder als Carbonat gebundenes CO₂ reduziert. Das Ansäuern erfolgt bevorzugt mit Phosphorsäure. Das Austreiben des CO₂ kann mit Vorteil durch Erhöhung der Temperatur und/oder durch Rühren oder anderweitiges Bewegen des Reaktionsansatzes beschleunigt werden.

Das Austreiben des CO₂ aus der Flüssigphase in der Stufe b) kann unmittelbar in dem in Stufe a) erhaltenen Ansatz erfolgen. Da dieser Ansatz jedoch häufig noch Feststoffe enthält, die in den nachfolgenden Verfahrensstufen nicht mehr benötigt werden oder sogar die Verfahrensführung stören können, ist es erfindungsgemäß bevorzugt, in dem in Stufe a) erhaltenen Ansatz gegebenenfalls noch enthaltene Feststoffe von der Flüssigphase abzutrennen und nur die Flüssigphase der Stufe b) zuzuführen. Das Abtrennen von Feststoffen von der Flüssigphase erfolgt zweckmäßigerweise durch Sieben, Sedimentation, Filtration, Ultrafiltration, Zentrifugation oder eine Kombination dieser Verfahren. Das Abtrennen von Feststoffen kann auch in mehreren Stufen erfolgen, bei denen zunächst grobe bzw. größere Feststoffe durch ein erstes geeignetes Verfahren abgetrennt werden und anschließend feinere Feststoffe durch ein oder mehrere weitere geeignete Verfahren abgetrennt werden.

### Zu Stufe (c):

Das Freisetzen und Austreiben des Ammoniaks in der Flüssigphase in Stufe (c) des erfindungsgemäßen Verfahrens, das sogenannte Ammoniak-Stripping, ist grundsätzlich bekannt. Es erfolgt erfindungsgemäß durch Alkalisieren der Flüssigphase, vorzugsweise mittels CaO oder Ca(OH)₂ (Kalkmilch), gegebenenfalls im Gemisch mit NaOH, und Austreiben des gasförmigen Ammoniaks unter Erwärmung und/oder durch Anlegen eines Unterdruckes und/oder mit Hilfe eines Luft- oder Dampfstromes.

In einer bevorzugten Ausführungsform des erfindungsgemäßen Verfahrens erfolgt in Stufe (c) die Alkalisierung der Flüssigphase bis zu einem pH-Wert von 9 bis 14, vorzugsweise 10 bis 13, besonders bevorzugt 11 bis 12.

Der ausgetriebene gasförmige Ammoniak kann in Mineralsäure oder Wasser absorbiert werden. Zweckmäßigerweise wird er erfindungsgemäß direkt der Stufe (e) zugeführt und mit Phosphorsäure [H₃PO₄] umgesetzt unter Erhalt von Ammonium-Phosphat-Verbindung, vorzugsweise Di-Ammoniumhydrogenphosphat [(NH₄)₂HPO₄].

### Zu Stufe (d):

Bei der Alkalisierung der Flüssigphase und dem Austreiben des Ammoniaks in Stufe (c) des erfindungsgemäßen Verfahrens entsteht Calcium-Phosphat üblicherweise als Tricalcium-Phosphat [Ca₃(PO₄)₂] oder Hydroxylapatit [Ca₅(PO₄)₃(OH)], welches verschiedenen Verwendungen zugeführt werden kann. Es wird daher erfindungsgemäß in Stufe (d) des Verfahrens aus der Flüssigphase gefällt und abgetrennt. Zweckmäßigerweise erfolgt dies mittels Filtration, Zentrifugation, Sedimentation oder einer Kombination der vorgenannten Verfahren.

### Zu Stufe (e):

In Stufe e) wird der in Stufe (c) gewonnene Ammoniak [NH₃] mit Phosphorsäure [H₃PO₄] unter Erhalt von Ammonium-Phosphat-Verbindung, vorzugsweise Di-Ammoniumhydrogenphosphat [(NH₄)₂HPO₄], umgesetzt und die gewonnene Ammonium-Phosphat-Verbindung kristallisiert und von der Flüssigphase abgetrennt. Vorzugsweise wird Phosphorsäure in einer Konzentration von 40 - 89 Gew.-% eingesetzt, besonders bevorzugt in einer Konzentration von 50 - 75 Gew.-%.

Das in der erfindungsgemäßen Verfahrensstufe (e) gewonnene Ammonium-Phosphat, vorzugsweise Di-Ammoniumhydrogenphosphat [(NH₄)₂HPO₄], ist ein wertvoller landwirtschaftlicher Dünger, der im Vergleich zu den biologischen Abfällen, aus denen er gewonnen wurde und die in der Regel ebenfalls als Dünger geeignet sind, wesentlich höher konzentriert ist und weniger Volumen einnimmt. Er lässt sich daher mit Vorteil besser Lagern und kostengünstiger sowie umweltschonender transportieren als die ursprünglichen biologischen Abfälle bei entsprechend gleicher Düngerleistung. Zudem ist Di-Ammoniumhydrogenphosphat aufgrund seiner höheren Wasserlöslichkeit und Bioverfügbarkeit als Dünger wesentlich besser geeignet als beispielsweise das in Stufe (d) erhaltene Calcium-Phosphat. Darüber hinaus stellt Di-Ammoniumhydrogenphosphat im Gegensatz zu Calcium-Phosphat gleichzeitig eine für die Pflanzenernährung wertvolle und erforderliche Stickstoffquelle bereit, sodass zusätzlicher Stickstoffdünger für die Pflanzendüngung nicht oder nur in geringerer Menge benötigt wird.

### Zu Stufe (f):

In einer ersten Anwendung gemäß Stufe (f) kann das in Stufe d) als Tricalcium-Phosphat [Ca₃(PO₄)₂] oder Hydroxylapatit [Ca₅(PO₄)₃(OH)] gewonnene Calcium-Phosphat direkt als Phosphatdünger oder als Nährmedium in die Denitrifizierungsstufe einer Kläranlage eingesetzt werden. Allerdings sind Tricalcium-Phosphat und Hydroxylapatit wesentlich schlechter wasserlöslich und besitzen eine deutlich niedrigere Bioverfügbarkeit als Calciumhydrogenphosphat (Dicalcium-Phosphat) oder Di-Ammoniumhydrogenphosphat. Das erfindungsgemäße Verfahren sieht daher für das in Stufe (d) gewonnene Calcium-Phosphat vorteilhaftere alternative Verwendungen vor.

Gemäß einer bevorzugten alternativen Anwendung gemäß Stufe (f) wird daher das in Stufe d) als Tricalcium-Phosphat [Ca₃(PO₄)₂] oder Hydroxylapatit [Ca₅(PO₄)₃(OH)] gewonnene Calcium-Phosphat mit Schwefelsäure [H₂SO₄] unter Gewinnung von Calcium-Sulfat (Gips) und Phosphorsäure [H₃PO₄] umgesetzt und das Calcium-Sulfat von der Flüssigphase abgetrennt.

Der so gewonnene Gips kann mit Vorteil beispielsweise in der Bauindustrie verwertet werden. Die bei der Umsetzung von Calcium-Phosphat mit Schwefelsäure in der Restflüssigphase erhaltene Phosphorsäure wird zweckmäßigerweise der Stufe (e) zur Umsetzung des in Stufe (c) gewonnenen Ammoniaks mit Phosphorsäure unter Erhalt und Fällung von Ammonium-Phosphat-Verbindung zugeführt.

In der Regel wird die bei der Umsetzung von Calcium-Phosphat mit Schwefelsäure gewonnene Phosphorsäure zu stark verdünnt sein und auch stöchiometrisch nicht ausreichen, um den in Stufe (c) gewonnenen Ammoniak im Wesentlichen vollständig zu der gewünschten Ammonium-Phosphat-Verbindung umzusetzen. Es ist daher erfindungsgemäß vorteilhaft, die Konzentration der bei der Umsetzung von Calcium-Phosphat mit Schwefelsäure gewonnenen Phosphorsäure und den stöchiometrischen Anteil an Phosphorsäure vor der Umsetzung mit dem Ammoniak zu erhöhen. Zweckmäßigerweise erfolgt dies erfindungsgemäß durch Entfernen von Wasser aus der Flüssigphase und/oder vorzugsweise durch Zusatz von weiterer, zweckmäßigerweise höher konzentrierter Phosphorsäure. Hierfür wird erfindungsgemäß bevorzugt Phosphorsäure aus der Aufbereitung von Klärschlammasche, beispielsweise aus dem "REMONDIS TetraPhos-Verfahren" gewonnene Phosphorsäure verwendet, da diese als günstiges Produkt bei der Aufbereitung von Klärschlammasche nach diesem Verfahren anfällt.

Ein weiterer Vorteil der Verwendung einer aus der Aufbereitung von Klärschlammasche gewonnen Phosphorsäure in dem erfindungsgemäßen Verfahren ergibt sich aufgrund kurzer Transportwege, wenn die Anlagen zur Durchführung des erfindungsgemäßen Verfahrens und zur Aufbereitung der Klärschlammasche nahe beieinander und auch in der Nähe einer Kläranlage angesiedelt sind oder beides direkt in der Kläranlage erfolgt.

In einer weiteren alternativen Anwendung gemäß Stufe (f) wird das in Stufe (d) als Tricalcium-Phosphat [Ca₃(PO₄)₂] oder Hydroxylapatit [Ca₅(PO₄)₃(OH)] gewonnene Calcium-Phosphat mit der Asche verbrannter biologischer Abfälle und/oder mit Klärschlammasche gemischt und mit Phosphorsäure [H₃PO₄], Salpetersäure [HNO₃] oder einem Mineralsäuregemisch der beiden Säuren unter Gewinnung von Phosphorsäure [H₃PO₄] umgesetzt. Dies kann mit Vorteil nach dem oben genannten "REMONDIS TetraPhos-Verfahren" erfolgen. Der Phosphatanteil des Calcium-Phosphats wird dabei in Phosphorsäure überführt und kann wiederum der Stufe (e) zum Umsetzen des in Stufe (c) gewonnenen Ammoniaks zur Herstellung von Ammonium-Phosphat-Verbindung, vorzugsweise Ammonium-Hydrogenphosphat eingesetzt werden.

Die bei dem erfindungsgemäßen Verfahren erhaltene Rest-Flüssigphase aus dem Aufbereitungsprozess ist so stark von Phosphaten und Stickstoffverbindungen abgereichert, dass sie in der Regel nach einer Ultrafiltration oder sogar ohne weitere Behandlung über das Abwasser entsorgt werden kann. Mit Vorteil kann die Rest-Flüssigphase direkt oder über das Abwassersystem der nächsten kommunalen Kläranlage zugeführt werden. Alternativ kann die erhaltene Rest-Flüssigphase beispielsweise auch direkt zur landwirtschaftlichen Bewässerung eingesetzt werden.

Das erfindungsgemäße Gesamtverfahren löst eine Reihe von Problemen, die mit biologischen Abfällen einhergehen, beispielsweise die Problematik der Entsorgung und/oder Lagerung solcher Abfälle in Regionen mit Überkapazitäten und des umweltbelastenden Transports solcher Abfälle in Regionen, in denen diese Abfälle beispielsweise als Dünger verwertet werden könnten. Gleichzeitig lassen sich mit dem erfindungsgemäßen Gesamtverfahren Wert- und Nährstoffe aus den biologischen Abfällen zurückgewinnen, insbesondere Stickstoff und Phosphor, und diese einer erneuten nützlichen Verwendung zuführen. Dabei greift das erfindungsgemäße Gesamtverfahren auf kostengünstige Einsatzstoffe zurück und erzeugt wertvolle Produkte, wie Di-Ammoniumphosphat-Dünger, der gut wasserlöslich und bioverfügbar ist. Die voluminöse Flüssigphase der biologischen Abfälle wird derart aufbereitet, dass sie als Rest-Flüssigkeit in den kommunalen Abwasserkreislauf zurückgeführt oder in der Landwirtschaft ausgebracht werden kann. Durch das erfindungsgemäße Gesamtverfahren werden die biologischen Abfälle insgesamt in einem wirtschaftlich rentablen Kreislaufprozess aufbereitet und Umweltbelastungen gegenüber der bisherigen Entsorgung und/oder Verwendung biologischer Abfälle vermindert.

### Figuren

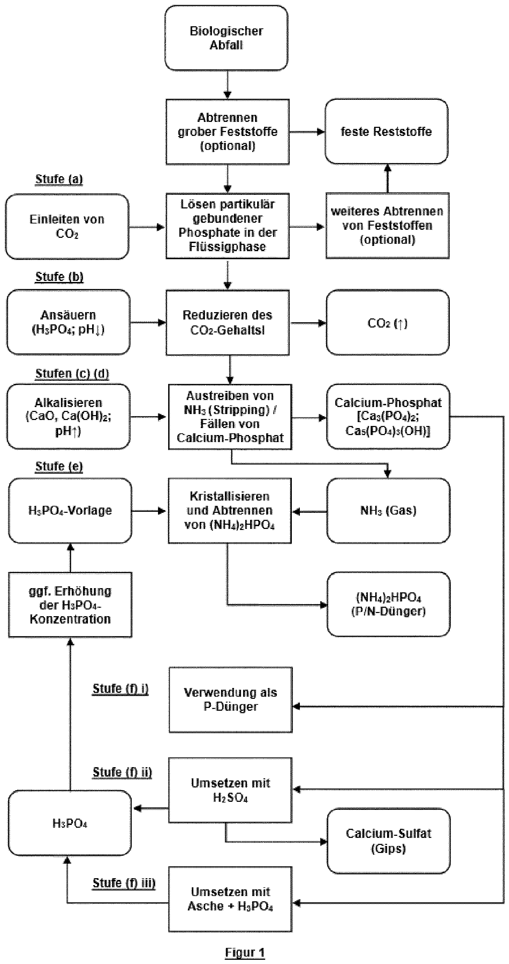

- Figur 1: ist eine schematische Darstellung des erfindungsgemäßen Gesamtverfahrens mit den Stufen (a) bis (f).

### Beispiel

Gärrest aus einer Biogasanlage wurde zunächst durch Sieben von groben Partikeln mit Abmessungen ≥ 5 mm befreit. Die durchschnittliche Partikelgröße im Gärrest lag vor dem Sieben bei etwa 10 mm. In der Flüssigphase des gesiebten Gärrestes wurden der pH-Wert, die Leitfähigkeit und der P₂O₅-Gehalt bestimmt (siehe Tabelle 1, "vor Stufe (a)"). Anschließend wurden 10 kg des gesiebten Gärrestes um den Faktor 5 mit Leitungswasser verdünnt, in einen Druckreaktor gegeben und bei einem Druck von 10 bar für etwa 5 min mit CO₂ beaufschlagt, bis der pH-Wert im Gärrest durch die CO₂-Behandlung auf ca. 5,8 gesenkt war. Dabei ging der zunächst partikulär gebundene Phosphor in die Flüssigphase über.

Anschließend wurden mittels einer Laborzentrifuge die noch in dem Ansatz enthaltenen Feststoffe von der Flüssigphase getrennt. Dabei wurden etwa 7,5 Liter Flüssigphase (Filtrat) und etwa 2,5 kg Feststoffphase (Filterkuchen) erhalten. Die Feststoffphase hatte einen Trockensubstanzgehalt von etwa 20 %. In der erhaltenen Flüssigphase wurden anschließend erneut der pH-Wert, die Leitfähigkeit und der P₂O₅-Gehalt bestimmt (siehe Tabelle 1, "nach Stufe (a)").

**Tabelle 1: Phosphatextraktion aus Gärrest mittels CO₂**

| | **Gärrest** | |
|---|---|---|
| **Parameter** | **"vor Stufe (a)" (vor CO₂-Behandlung)** | **"nach Stufe (a)" (nach CO₂-Behandlung)** |
| Trockensubstanz [Gew.-%] | 5 | 1 |
| pH-Wert | 7,8 | 5,8 |
| Leitfähigkeit [mS/cm] | 18,5 | 5,3 |
| P₂O₅ [mg/l] | 513 | 199 |

In gleicher Weise wie der Gärrest wurde auch Rindergülle behandelt und die Phosphatextraktion durch die CO₂-Behandlung bestimmt. Die Ergebnisse mit Gülle als biologischem Abfall sind in der folgenden Tabelle 2 angegeben.

**Tabelle 2: Phosphatextraktion aus Rindergülle mittels CO₂**

| | **Rindergülle** | |
|---|---|---|
| **Parameter** | **"vor Stufe (a) = CO₂-Behandlung** " | **"nach Stufe (a) = CO₂-Behandlung"** |
| Trockensubstanz [Gew.-%] | 3,7 | 1 |
| pH-Wert | 7,6 | 5,9 |
| Leitfähigkeit [mS/cm] | 17,3 | 7,6 |
| P₂O₅ [mg/l] | 378 | 177 |

In der nächsten Stufe wurde der Gehalt des in den 7,5 Liter Flüssigphase (Filtrat) enthaltenen Kohlenstoffdioxids durch Rühren in einem Laborrührer bei 500 U.p.M. für 10 min und unter Zugabe von 10 ml 50 Gew.-%iger Phosphorsäure ohne Temperaturerhöhung reduziert.

Anschließend wurde der im Filtrat enthaltene Stickstoff als Ammoniakgas (NH₃) ausgetrieben (Stripping). Hierzu wurden dem Filtrat 350 g 3 %-ige Kalkmilch (Ca(OH)₂) zugegeben und unter Rühren in einem Laborrührer bei 500 U.p.M. für 10 min ohne Temperaturerhöhung dabei der pH-Wert auf 11,5 angehoben. Das Ammoniakgas wurde mittels Luftstripping (5 L Luft/min) ausgetrieben und in einer Waschflasche mit einer Vorlage von 50 Gew.-%iger Phosphorsäure unter Bildung von Di-Ammoniumhydrogenphosphat aufgefangen. Die Ausbeute an NH₃ kann etwa 98% oder mehr betragen, wenn das entstandene Di-Ammoniumhydrogenphosphat kristallisiert und in einem weiteren Filtrationsschritt von der Flüssigphase der Vorlage abgetrennt, die restliche Flüssigphase der Vorlage mit 75 Gew.-%iger Phosphorsäure aufgestockt und bei der nächsten Umsetzung von Ammoniakgas mit Phosphorsäure eingesetzt wird. Das entstehende Di-Ammoniumhydrogenphosphat kann als kombinierter N/P-Dünger eingesetzt werden.

Als weitere Reaktion der Anhebung des pH-Wertes im Filtrat für das Austreiben des Ammoniaks fiel im Filtrat gelöstes Phosphat als Calciumphosphat aus und bildete einen Niederschlag. Dieser Niederschlag wurde in einem weiteren Filtrationsschritt von der Flüssigphase abgetrennt. Die Ausbeute betrug etwa 95%. Bei geringeren Ausbeuten aufgrund hoher Alkali-Gehalte kann durch Zugabe von CaCl₂ nahezu 100% Calciumphosphat ausgefällt werden.

Das gewonnene Calciumphosphat wurde anschließend mit 60-70 Gew.-%iger Schwefelsäure unter Bildung und Ausfällung von Calciumsulfat (Gips) umgesetzt und in einem weiteren Filtrationsschritt von der Flüssigphase abgetrennt. Die Ausbeute betrug etwa 95%. Das Filtrat enthielt Phosphorsäure, die dann nach einer Stufe der Aufkonzentrierung wieder der Stufe des Auffangens von Ammoniakgas unter Bildung von Ammoniumhydrogenphosphat zugeführt wurde.

Die verbliebenen Rest-Flüssigphasen wurden dem kommunalen Abwasser zugeführt.

## Patentansprüche

1. Gesamtverfahren zur Aufbereitung von biologischen Abfällen, welche eine wässrige Flüssigphase umfassen, in der wenigstens Harnstoff und Ammoniumverbindungen sowie anorganisch und organisch gebundene Phosphate gelöst und/oder in partikulärer Form enthalten sind, vorzugsweise von Gülle, Jauche und Gärresten aus Biogasanlagen, umfassend die folgenden Verfahrensstufen:
| | |
|---|---|
| Stufe (a): | Einleiten von Kohlendioxidgas [CO₂] unter erhöhtem Druck oder von überkritischem Kohlendioxid in die Flüssigphase, um partikulär gebundene Phosphate in Lösung zu bringen; |
| Stufe (b): | Reduzieren des CO₂-Gehalts in der Flüssigphase durch Ansäuern der Flüssigphase und Austreiben von gelöstem CO₂ und/oder als Carbonat gebundenem CO₂; |
| Stufe (c): | Alkalisieren der Flüssigphase unter Freisetzung von Ammoniak [NH₃], vorzugsweise mittels CaO oder Ca(OH)₂ (Kalkmilch), gegebenenfalls im Gemisch mit NaOH, und Austreiben des Ammoniaks [NH₃] unter Erwärmung und/oder durch Anlegen eines Unterdruckes und/oder mit Hilfe eines Luft- oder Dampfstromes (Ammoniak-Stripping); |
| Stufe (d): | Fällen und Abtrennen von Calcium-Phosphat aus der Flüssigphase, vorzugsweise als Tricalcium-Phosphat [Ca₃(PO₄)₂] oder Hydroxylapatit [Ca₅(PO₄)₃(OH)]; |
| Stufe (e): | Umsetzen des in Stufe (c) gewonnenen Ammoniaks [NH₃] mit Phosphorsäure [H₃PO₄] unter Erhalt von Ammonium-Phosphat-Verbindung, vorzugsweise Di-Ammoniumhydrogenphosphat [(NH₄)₂HPO₄] (Dünger), und Abtrennen der gewonnenen Ammonium-Phosphat-Verbindung; |
| Stufe (f): | i) Verwendung oder Bereitstellen des in Stufe (d) gewonnenen Calcium-Phosphats zur Verwendung als Pflanzennährstoff (Dünger) und/oder |
| | ii) Umsetzen des in Stufe (d) gewonnenen Calcium-Phosphats mit Schwefelsäure [H₂SO₄] unter Gewinnung von Calcium-Sulfat (Gips) und Phosphorsäure [H₃PO₄] und Abtrennen des Calcium-Sulfats von der Flüssigphase und/oder |
| | iii) Mischen des in Stufe (d) gewonnenen Calcium-Phosphats mit der Asche verbrannter biologischer Abfälle und/oder Klärschlammasche und Umsetzen des Gemisches mit Phosphorsäure [H₃PO₄], Salpetersäure [HNO₃] oder einem Mineralsäuregemisch der beiden Säuren unter Gewinnung von Phosphorsäure [H₃PO₄]. |

2. Verfahren nach Anspruch 1, **dadurch gekennzeichnet, dass** vor oder nach Durchführung der Stufe (a) Feststoffe in den biologischen Abfällen von der wässrigen Flüssigphase mechanisch abgetrennt und/oder zerkleinert werden, wobei die mechanische Abtrennung von der wässrigen Flüssigphase vorzugsweise durch Sieben, Filtration, Zentrifugation, Sedimentation oder einer Kombination der vorgenannten erfolgt.

3. Verfahren nach einem der vorhergehenden Ansprüche, **dadurch gekennzeichnet, dass** in der Flüssigphase enthaltener Harnstoff durch Zugabe des Enzyms Urease unter Erhalt von Ammoniak und/oder Ammonium hydrolysiert wird.

4. Verfahren nach einem der vorhergehenden Ansprüche, **dadurch gekennzeichnet, dass** in Stufe (c) die Alkalisierung der Flüssigphase bis zu einem pH-Wert von 9 bis 14, vorzugsweise 10 bis 13, besonders bevorzugt 11 bis 12 erfolgt.

5. Verfahren nach einem der vorhergehenden Ansprüche, **dadurch gekennzeichnet, dass** in Stufe (d) das Abtrennen von Calcium-Phosphat, vorzugsweise als Tricalcium-Phosphat [Ca₃(PO₄)₂] oder Hydroxylapatit [Ca₅(PO₄)₃(OH)] aus der Flüssigphase, mittels Filtration, Zentrifugation, Sedimentation oder einer Kombination der vorgenannten durchgeführt wird.

6. Verfahren nach einem der vorhergehenden Ansprüche, **dadurch gekennzeichnet, dass** in Stufe (e) für die Umsetzung des in Stufe (c) gewonnenen Ammoniaks [NH₃] die in Stufe (f) gewonnenen Phosphorsäure [H₃PO₄] verwendet wird, wobei vorzugsweise die Phosphorsäurekonzentration vor der Umsetzung und/oder im Ansatz durch Entfernen von Wasser und/oder durch Zusatz von Phosphorsäure, vorzugsweise durch Zusatz von Phosphorsäure aus der Aufbereitung von Klärschlammasche, erhöht wird.

7. Verfahren nach einem der vorhergehenden Ansprüche, **dadurch gekennzeichnet, dass** die in Stufe (e) für die Umsetzung des in Stufe (c) gewonnenen Ammoniaks [NH₃] verwendete Phosphorsäure [H₃PO₄] in einer Konzentration von 40 - 89 Gew.-%, bevorzugt in einer Konzentration von 50 - 75 Gew.-% eingesetzt wird.

## Claims

1. Overall method for the treatment of biological waste, which comprises an aqueous liquid phase in which at least urea and ammonium compounds and inorganically and organically bound phosphates are dissolved and/or contained in particulate form, preferably liquid manure, liquid manure and fermentation residues from biogas plants, comprising the following Process steps:
| | |
|---|---|
| Stage (a): | Introducing carbon dioxide gas [CO₂] under increased pressure or supercritical carbon dioxide into the liquid phase in order to dissolve particulate-bound phosphates; |
| Step (b): | Reducing the CO₂ content in the liquid phase by acidifying the liquid phase and driving off dissolved CO₂ and/or CO₂ bound as carbonate; |
| Stage (c): | Alkalizing the liquid phase with the release of ammonia [NH3], preferably using CaO or Ca(OH)₂ (lime milk), optionally mixed with NaOH, and expelling the ammonia [NH₃] with heating and/or by applying a negative pressure and/or with the aid of an air or steam stream (ammonia stripping); |
| Stage (d): | Precipitating and separating of calcium phosphate from the liquid phase, preferably as tricalcium phosphate [Ca₃(PO₄)₂] or hydroxyapatite [Ca₅(PO₄)₃(OH)]; |
| Stage (e): | Reacting the ammonia [NH₃] obtained in stage (c) with phosphoric acid [H₃PO₄] to obtain ammonium phosphate compound, preferably diammonium hydrogen phosphate [(NH₄)₂HPO₄] (fertilizer), and separating the obtained ammonium phosphate compound; |
| Stage (f): | i) Using or providing the calcium phosphate obtained in stage (d) for use as a plant nutrient (fertilizer) and/or |
| | ii) Reacting the calcium phosphate obtained in step (d) with sulfuric acid [H₂SO₄] to obtain calcium sulfate (gypsum) and phosphoric acid [H₃PO₄] and separating the calcium sulfate from the liquid phase and/or |
| | iii) Mixing the calcium phosphate obtained in step (d) with the ash of incinerated biological waste and/or sewage sludge ash and reacting the mixture with phosphoric acid [H3PO4], nitric acid [HNO₃] or a mineral acid mixture of the two acids to obtain phosphoric acid [H₃PO₄]. |

2. Method according to claim 1, **characterized in that** before or after carrying out Stage (a) solids in the biological waste are mechanically separated from the aqueous liquid phase and/or crushed, wherein the mechanical separation from the aqueous liquid phase takes place preferably by sieving, filtration, centrifugation, sedimentation or a combination of the above.

3. Method according to any one of the preceding claims, **characterized in that** urea contained in the liquid phase is hydrolyzed by adding the enzyme urease to obtain ammonia and/or ammonium.

4. Method according to any one of the preceding claims, **characterized in that** in Stage (c) the alkalization of the liquid phase takes place up to a pH of from 9 to 14, preferably 10 to 13, particularly preferably 11 to 12.

5. Method according to any one of the preceding claims, **characterized in that** in Stage (d) the separation of calcium phosphate, preferably as tricalcium phosphate [Ca₃(PO₄)₂] or hydroxyapatite [Ca₅(PO₄)₃(OH)], from the liquid phase is done by filtration, centrifugation, sedimentation or a combination of the above.

6. Method according to any one of the preceding claims, **characterized in that** in Stage (e) for the conversion of the ammonia [NH₃], obtained in Stage (c), the phosphoric acid [H₃PO₄], obtained in Stage (f) is used, wherein preferably the phosphoric acid concentration is increased before the reaction and/or in the batch by removing water and/or by adding phosphoric acid, preferably by adding phosphoric acid from the processing of sewage sludge ash.

7. Method according to any one of the preceding claims, **characterized in that** the phosphoric acid [H₃PO₄] used in Stage (e) for the conversion of the ammonia [NH₃], obtained in stage (c), is used in a concentration of 40-89% by weight, preferably used in a concentration of 50-75% by weight.

## Revendications

1. Procédé complet de traitement de déchets biologiques, qui comprennent une phase liquide aqueuse, dans laquelle sont dissous et/ou contenus sous forme particulaire au moins de l'urée et des composés d'ammonium ainsi que des phosphates à liaison inorganique et organique, de préférence du lisier, du purin et des résidus de fermentation provenant d'installations de biogaz, comprenant les étapes de procédé suivantes :
| | |
|---|---|
| Étape (a) : | Introduction de dioxyde de carbone gazeux [CO₂] sous pression élevée ou de dioxyde de carbone supercritique dans la phase liquide, pour amener en solution des phosphates à liaison particulaire ; |
| Étape (b) : | Réduction de la teneur en CO₂ dans la phase liquide par acidification de la phase liquide et extraction du CO₂ dissous et/ou du CO₂ lié sous forme de carbonate ; |
| Étape (c) : | Alcalinisation de la phase liquide avec libération de l'ammoniac [NH₃], de préférence au moyen de CaO ou Ca(OH)₂ (lait de chaux), le cas échéant en mélange avec du NaOH, et extraction de l'ammoniac [NH₃] sous chauffage et/ou par application d'une pression négative et/ou à l'aide d'un courant d'air ou de vapeur (strippage de l'ammoniac) ; |
| Étape (d) : | Précipitation et séparation du phosphate de calcium hors de la phase liquide, de préférence sous forme de triphosphate de calcium [Ca₃(PO₄)₂] ou d'hydroxyapatite [Ca₅(PO₄)₃ (OH)] ; |
| Étape (e) : | Conversion de l'ammoniac [NH₃] obtenu à l'étape (c) avec de l'acide phosphorique [H₃PO₄] avec obtention d'un composé de phosphate d'ammonium, de préférence du dihydrogénophosphate d'ammonium [(NH₄)₂HPO₄] (engrais), et séparation du composé de phosphate d'ammonium obtenu ; |
| Étape (f) : | i) Utilisation ou mise à disposition du phosphate de calcium obtenu à l'étape (d) pour l'utilisation en tant que nutriment pour plantes (engrais) et/ou |
| | ii) Conversion du phosphate de calcium obtenu à l'étape (d) avec de l'acide sulfurique [H₂SO₄] avec obtention de sulfate de calcium |
| | (gypse) et d'acide phosphorique [H₃PO₄] et séparation du sulfate de calcium de la phase liquide et/ou |
| | iii) Mélange du phosphate de calcium obtenu à l'étape (d) avec de la cendre de déchets biologiques consumés et/ou de la cendre de boues clarifiées et conversion du mélange avec de l'acide phosphorique [H₃PO₄], de l'acide nitrique [HNO₃] ou un mélange d'acide minéral des deux acides avec obtention d'acide phosphorique [H₃PO₄]. |

2. Procédé selon la revendication 1, **caractérisé en ce que**, avant ou après la réalisation de l'étape (a), les matières solides dans les déchets biologiques sont séparées mécaniquement de la phase liquide aqueuse et/ou broyées, la séparation mécanique de la phase liquide aqueuse s'effectuant de préférence par criblage, filtration, centrifugation, sédimentation ou une combinaison des éléments précités.

3. Procédé selon l'une des revendications précédentes, **caractérisé en ce que** l'urée contenue dans la phase liquide est hydrolysée par addition de l'enzyme uréase avec obtention d'ammoniac et/ou d'ammonium.

4. Procédé selon l'une des revendications précédentes, **caractérisé en ce que**, à l'étape (c), l'alcalinisation de la phase liquide s'effectue jusqu'à un pH de 9 à 14, de préférence de 10 à 13, de manière particulièrement préférée de 11 à 12.

5. Procédé selon l'une des revendications précédentes, **caractérisé en ce que**, à l'étape (d), la séparation du phosphate de calcium, de préférence sous forme de triphosphate de calcium [Ca₃(PO₄)₂] ou d'hydroxyapatite [Ca₅(PO₄)₃(OH)], hors de la phase liquide s'effectue par filtration, centrifugation, sédimentation ou une combinaison des éléments précédents.

6. Procédé selon l'une des revendications précédentes, **caractérisé en ce que** l'on utilise l'acide phosphorique [H₃PO₄], obtenu à l'étape (f), à l'étape (e) pour la conversion de l'ammoniac [NH₃] obtenu à l'étape (c), la concentration en acide phosphorique étant de préférence accrue avant la conversion et/ou au début par élimination de l'eau et/ou par addition d'acide phosphorique, de préférence par addition d'acide phosphorique issu du traitement de la cendre de boues clarifiées.

7. Procédé selon l'une des revendications précédentes, **caractérisé en ce que** l'on met en oeuvre l'acide phosphorique [H₃PO₄] utilisé à l'étape (e) pour la conversion de l'ammoniac [NH₃] obtenu à l'étape (c) en une concentration de 40 à 89 % en poids, de préférence en une concentration de 50 à 75 % en poids.
